# EUROPÄISCHE PATENTSCHRIFT

(11) **EP 1 228 157 B1**
(45) Veröffentlichungstag und Bekanntmachung des Hinweises auf die Patenterteilung: **14.01.2009**
(21) Anmeldenummer: 00960666.6
(22) Anmeldetag: 15.09.2000
(51) Int. Cl.: C09J 7/02

(54) **VERWENDUNG VON POLYMERISATEN ALS KLEBSTOFFE FÜR WIEDERABZIEHBARE TRÄGER**
USE OF POLYMERS AS ADHESIVES FOR REMOVABLE CARRIERS
USAGE DES POLYMERES POUR COLLES POUR SUPPORTS AMOVIBLES

(30) Priorität: 30.09.1999 DE 19946897
(43) Veröffentlichungstag der Anmeldung: 07.08.2002
(73) Patentinhaber: BASF SE, 67056 Ludwigshafen (DE)
(72) Erfinder: MEYER-ROSCHER, Bernd, 67434 Neustadt (DE); SCHUMACHER, Karl-Heinz, 67433 Neustadt (DE); BARWICH, Jürgen, 67434 Neustadt (DE); FINK, Ralf, 67117 Limburgerhof (DE); DÜSTERWALD, Uwe, 66851 Queidersbach (DE)
(86) Internationale Anmeldenummer: PCT/EP2000/009021
(87) Internationale Veröffentlichungsnummer: WO 2001/023488

(56) Entgegenhaltungen:
- EP-A- 0 367 054
- WO-A-93/13148
- US-A- 4 737 559

## Beschreibung

Die Erfindung betrifft die Verwendung von radikalisch polymerisierten, mit UV-Licht vernetzbaren Polymerisaten, als Klebstoff für die Verklebung von mit dem Polymerisat beschichteten Trägern auf Substraten, dadurch gekennzeichnet, daß es sich bei 0,1 bis 30 Gew % der Monomeren, aus denen das Polymerisat aufgebaut ist, um Methyl(meth)acrylat handelt und darüber hinaus das Polymerisat zu 80 bis 98,9 Gew.-% aus n-Butylacrylat, Ethylacrylat oder 2-Ethylhexylacrylat und zu 0,05 bis 10 Gew.-% aus ethylenisch ungesättigten Verbindungen mit einer Fotoinitiatorgruppe besteht und es sich bei den Trägern um wiederabziehbare Träger handelt.

UV-Licht vernetzbare Polymerisate und ihre Verwendung als Klebstoff, z.B. als Schmelzhaftklebstoff, sind z.B. aus DE-A-2 411 169, EP-A-246 848, DE-A-4 037 079 oder DE-A-3 844 444 bekannt.

Aus EP-A-367 054 sind UV-Licht vernetzbare Polymerisate, welche zwingend i-Amyl(meth)acrylat enthalten als Schmelzhaftklebstoffe für wiederabziehbare Etiketten bekannt.

Aufgabe der vorliegenden Erfindung war, alternative Polymerisate für eine derartige Verwendung zur Verfügung stellen. Demgemäß wurde die eingangs definierte Verwendung gefunden.

Zur Vernetzung mit UV-Licht kann das Polymerisat einen Fotoinitiator enthalten. Der Fotoinitiator kann an das Polymerisat gebunden sein, er kann aber auch ungebunden und lediglich mit dem Polymerisat vermischt sein.

Übliche Fotoinitiator, die dem Polymerisat zugesetzt werden können sind z.B. Acetophenon, Benzoinether, Benzyldialkylketole oder deren Derivate.

Der Gehalt des zugemischten Fototinitiators beträgt vorzugsweise 0,05 bis 10 Gew. Teile, besonders bevorzugt 0,1 bis 2 Gew. Teile pro 100 Gew. Teile Polymerisat.

Durch Bestrahlung mit energiereichen Licht, insbesondere UV-Licht, bewirkt der Fotoinitiator bzw. die Fotoinitiatorgruppe eine Vernetzung des Polymeren, vorzugsweise durch eine chemische Pfropfreaktion der Fotoinitiatorgruppe mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Der Wellenlängenbereich, in dem die Fotoinitiatorgruppe aktiviert werden kann, d.h. in den die Hauptabsorptionsbande der Fotoinitiatorgruppe liegt, ist vorzugsweise 200 bis 450 mm, besonders bevorzugt 250 bis 350, ganz besonders bevorzugt 250 bis 280 mm.

Bevorzugt ist der Fotoinitiator an das Polymer gebunden.

Das Polymerisat ist durch radikalische Polymerisation aus ethylenisch ungesättigten radikalisch polymerisierbaren Verbindungen erhältlich.

In dem bevorzugten Fall, daß der Fotoinitiator an das Polymerisat gebunden ist, wird vorzugsweise eine ethylenisch ungesättigte Verbindung mit einer Fotoinitiatorgruppe durch Copolymerisation eingebunden.

Das Polymerisat besteht im Fall des einpolymerisierten Fotoinitiators weiterhin zu 0,05 bis 10 Gew.-%, bevorzugt zu 0,1 bis 2 Gew.-% und besonders bevorzugt zu 0,1 bis 1 Gew.-% aus ethylenisch ungesättigten Verbindungen mit einer Fotoinitiatorgruppe.

Bei der ethylenisch ungesättigten Verbindung mit einer Fotoinitiatorgruppe handelt es sich vorzugsweise um ein Acetophenon- oder besonders bevorzugt ein Benzophenonderivat.

Geeignete Verbindungen sind Acetophenon- oder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis zu 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche der Formel 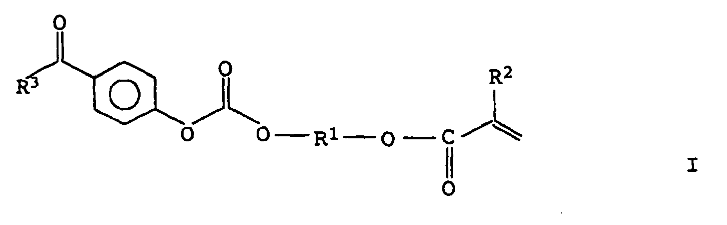 worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂-C₈-Alkylengruppe.

R³ steht besonders bevorzugt für eine Methylgruppe oder eine Phenylgruppe.

Das Polymerisat kann weitere ethylenisch ungesättigte Verbindungen als Aufbaukomponenten enthalten. Genannt seine z.B. Vinylestern von bis zu 20 C-Atome enthaltenden Carbonsäuren, Vinylaromaten mit bis zu 20 C-Atome, ethylenisch ungesättigten Nitrilen, vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Das Polymerisat kann weiterhin Monomere mit Carbonsäure, Sulfonsäure oder Phosphonsäuregruppen enthalten. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, (Meth)acrylamid oder Phenyloxyethylglykolmono-(meth-)acrylat, Glycidylacrylat, Glycidylmethacrylat, Amino-(meth-)acrylate wie 2-Aminoethyl-(meth-)acrylat genannt.

Wesentlich ist, daß es sich bei insgesamt 0, 1 bis 30 Gew.-% des Monomesen aus denen das Polymerisat aufgebaut ist, um Methyl(meth)acrylat handelt.

Bevorzugt handelt es sich bei 0,5 bis 20 Gew.-%, besonders bevorzugt bei 1 bis 12 Gew.-% der Monomeren um Methyl(meth)acrylat.

Das Polymerisat hat vorzugsweise einen K-Wert von 30 bis 80, besonders bevorzugt von 40 bis 60, gemessen in 1 % Lösung, (Lösungsmittel: Tetrahydrofuran, 21°C).

Der K-Wert nach Fikentscher ist ein Maß für das Molekulargewicht und Viskosität des Polymerisats.

Die Glasübertragungsterperatur (Tg) des Polymerisats beträgt vorzugsweise -60 bis +10°C, besonders bevorzugt -55 bis 0°C, ganz besonders bevorzugt -55 bis -20°C.

Die Glasübertragungstemperatur des Polymerisats läßt sich nach üblichen Methoden wie Differentialthermoanalyse oder Differential Scanning Calorimetrie (s. z.B. ASTM 3418/82, sog. "midpoint temperature" bestimmen.

Die UV-verneztbaren Polymerisat können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln, insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und isoPropanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen oder Ketonperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymerisate können dann in lösungsmittelfreiem Zustand, d.h. als Schmelzen, eingesetzt werden. In manchen Fällen ist es auch von Vorteil, die neuen UV-vernetzbaren Polymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Das Polymerisat kann als Schmelze, als Lösung in einem organischen Lösungsmittel oder als wäßrige Dispersion vorliegen und in dieser Form verwendet werden.

Vorzugsweise werden die Polymerisate als Schmelze, d.h. im wesentlichen lösungsmittelfrei (Lösungsmittelgehalt vorzugsweise kleiner 2 Gew.-%, bezogen auf das Polymerisat), verwendet.

Das Polymerisat kann nach üblichen Verfahren, z.B. Streichen, Walzen, Gießen, Rakeln auf Träger aufgetragen werden. Im Falle der Lösung oder wäßrigen Dispersion wird das Lösungsmittel oder Wasser entfernt, im allgemeinen durch Trocknung.

Zur Erhöhung der Fließfähigkeit des Polymerisats kann die Temperatur des Polymerisats beim Auftrag als Schmelze 10 bis 150°C, vorzugsweise 50 bis 150, besonders bevorzugt 100 bis 150°C betragen.

Bevorzugte Schichtdicken sind z.B. 2 bis 50 µm, besonders bevorzugt 5 bis 40, ganz besonders bevorzugt 10 bis 30 µm.

Als Träger in Betracht kommen z.B. Etiketten aus Papier oder Kunststoff, z.B. Polyester, Polyolefine oder PVC, sowie Klebebänder oder Folien aus den vorstehenden Kunststoffen. Bevorzugte Träger sind Etiketten oder Folien.

Die Polymerisate werden nach Aufbringen auf die Träger mit energiereicher Strahlung, vorzugsweise UV-Licht vernetzt.

Im allgemeinen werden die beschichteten Träger dazu auf ein Transportband gelegt und das Transportband an einer Strahlungsquelle, z.B. einer UV-Lampe vorbeigeführt.

Der Vernetzungsgrad der Polymerisate hängt von der Dauer und Intensität der Bestrahlung ab.

Vorzugsweise beträgt die Strahlungsenergie insgesamt 100 bis 1500 mJ/cm² bestrahlte Fläche.

Die erhaltenen, mit Polymerisat beschichteten Träger können dann auf die Substrate geklebt werden.

Als Substrate in Betracht kommen z.B. solche aus Glas, Kunststoff, Papier, Holz oder Metall.

Als Substrate für wiederabziehbare Etiketten seien im einzelnen Glasflaschen, Plastikflaschen, Verpackungsfolien aus Kunststoff oder Papier sowie bedrucktes oder lackiertes Papier oder Karton genannt.

Im Falle der Folien als Träger handelt es sich insbesondere um Schutzfolien. Diese werden im allgemeinen auf Substrate geklebt, um diese kurzzeitig bei Transport oder Lagerung vor Schäden zu bewahren. Verwendung finden Schutzfolien auch z.B. bei großflächigen, geformten Substraten wie Automobilen oder sonstigen Verkaufsprodukten aus Metall oder Kunststoff.

Die Polymerisate eignen sich demnach als Klebstoff, bzw. Haftklebstoff, insbesondere Schmelzhaftklebstoff für wiederabziehbare Träger. Die Träger haften sehr gut auf den Substraten, die Träger sind leicht manuell wiederabziehbar, wobei keine oder kaum Rückstände auf den Substraten zu beobachten sind.

### Beispiele

### I) Polymerisate

P1: Acrylpolymerisat, aufgebaut aus 91 Gew.-% Ethylhexylacrylat und 9 Gew.-% Hydroxyethylacrylat
V1: Acrylpolymerisat, aufgebaut aus 100 Gew.-% Ethylhexylacrylat
   Die Herstellung der Polymerisate erfolgte durch übliche Lösungspolymerisation und anschließendes Abdestillieren des Lösemittels
V2: Marktüblicher Klebstoff (nicht UV-vernetzbar) auf Kautschukbasis für wiederabziehbare Etiketten (Fasson® R100)

### II) Herstellung der beschichteten Träger und Prüfung

Die Polymerisate P1 und V1 wurden jeweils aus der Schmelze bei einer Temperatur von 120°C auf Etikettenpapier beschichtet. Die Schichtdicke betrug 20 µm.

Anschließend wurde das Polymerisat mit UV-Licht vernetzt.

V2 wurde in entsprechender Schichtdicke ohne UV-Vernetzung aufgebracht.

Das beschichtete Etikettenpapier wurde auf unterschiedliche Substrate (s. Tabelle 1) geklebt und mit einer Zugprüfmaschine die Schälfestigkeit des Verbunds durch Abziehen des Etikettenpapiers in N/25 mm bestimmt.

**Tabelle 1: Schälfestigkeit auf unterschiedlichen Substraten**

| | Glas | Stahl | Hart-PVC | Lackierter Karon (Chromolux) | Polyethylen |
|---|---|---|---|---|---|
| P1 | 1,4 | 6,3 | 5,3 | 3,4 | 1,7 |
| V1 | 0,5 | 1,0 | 1,1 | 2,0 | 0,5 |
| V2 | 2,9 | 3,2 | 3,3 | 2,8 | 3,3 |

Nach Abziehen der Etiketten von den Substraten wurden Klebstoffrückstände auf den Substraten visuell beurteilt:

**Tabelle 2:**

| | Glas | Stahl | Hart-PVC | Lackierter Karon (Chromolux) | Polyethylen |
|---|---|---|---|---|---|
| P1 | ohne sichtbaren Rückstand | ohne sichtbaren Rückstand | ohne sichtbaren Rückstand | ohne sicht baren Rück stand | ohne sichtbaren Rückstand |
| V1 | etwas sichtbarer Rückstand | etwa sichtbarer Rückstand | ohne sichtbaren Rückstand | etwas sichtbarer Rückstand | ohne sichtbaren Rückstand |
| V2 | ohne sichtbaren Rückstand | ohne sichtbaren Rückstand | etwas sichtbarer Rückstand | ohne sicht baren Rück stand | etwas sichtbarer Rückstand |

## Patentansprüche

1. Verwendung von radikalisch polymerisierten, mit UV-Licht vernetzbaren Polymerisaten als Klebstoff für die Verklebung von mit dem Polymerisat beschichteten Trägern auf Substraten, wobei es sich bei den Trägern um wiederabziehbare Träger handelt, **dadurch gekennzeichnet, daß** es sich bei 0,1 bis 30 Gew % der Monomeren, aus denen das Polymerisat aufgebaut ist, um Methyl(meth)acrylat handelt und darüber hinaus das Polymerisat zu 80 bis 98,9 Gew.-% aus n-Butylacrylat, Ethylacrylat oder 2-Ethylhexylacrylat und zu 0,05 bis 10 Gew % aus ethylenisch ungesättigten Verbindungen mit einer Fotoinitiatorgruppe besteht.

2. Verwendung gemäß Anspruch 1, **dadurch gekennzeichnet, daß** es sich bei der ethylenisch ungesättigten Verbindung mit einer Fotoinitiatorgruppe um ein Acetophenon- oder Benzophenonderivat handelt.

3. Verwendung gemäß einem der Ansprüche 1 oder 2, **dadurch gekennzeichnet, daß** das Polymerisat einen K-Wert von 30 bis 80, gemessen in 1 Gew.-%iger Lösung des Polymerisats in Tetrahydrofuran bei 21°C hat.

4. Verwendung gemäß einem der Ansprüche 1 bis 3, **dadurch gekennzeichnet, daß** die Glasübergangstemperatur des Polymerisats -60 bis +10°C beträgt.

5. Verwendung gemäß einem der Ansprüche 1 bis 4, **dadurch gekennzeichnet, daß** das Polymerisat als wäßrige Dispersion oder als Schmelze aufgetragen wird.

6. Verwendung gemäß einem der Ansprüche 1 bis 5, **dadurch gekennzeichnet, daß** es sich bei dem Träger um wiederabziehbare Etiketten oder wiederabziehbare Schutzfolien handelt.

7. Verwendung gemäß einem der Ansprüche 1 bis 6, **dadurch gekennzeichnet, daß** die Polymerisate auf Träger aufgetragen, anschließend durch energiereiche Strahlung, insbesondere UV-Licht, vernetzt und die erhaltenen, mit dem Polymerisat beschichteten Träger auf Substrate geklebt werden.

8. Verfahren zum Aufbringen von Trägern auf Substrate, **dadurch gekennzeichnet, daß** ein Polymerisat gemäß einem der Ansprüche 1 bis 4 aus der Schmelze, als Lösung oder wäßrige Dispersion auf die Träger aufgetragen, im Falle der Lösung oder wäßrigen Dispersion das Lösungsmittel oder das Wasser entfernt, das Polymerisat anschließend durch energiereiche Strahlung, insbesondere UV-Licht, vernetzt und die erhaltenen, mit dem Polymerisat beschichteten Träger auf Substrate geklebt werden, wobei die Träger wiederabziehbar sind.

## Claims

1. The use of free-radically polymerized, UV-crosslinkable polymers as adhesives for the bonding of carriers coated with the polymer on substrates, said carriers being peelable carriers, wherein from 0.1 to 30% by weight of the monomers of which said polymer is composed are methyl (meth)acrylate and furthermore the polymer consists to the extent of from 80 to 98.9% by weight of n-butyl acrylate, ethyl acrylate or 2-ethylhexyl acrylate and to the extent of from 0.05 to 10% by weight of ethylenically unsaturated compounds having a photoinitiator group.

2. The use according to claim 1, wherein the ethylenically unsaturated compound having a photoinitiator group is an acetophenone derivative or benzophenone derivative.

3. The use according to either of claims 1 and 2, wherein said polymer has a K value of from 30 to 80, measured in 1% strength by weight solution of said polyrner in tetrahydrofuran at 21°C.

4. The use according to any of claims 1 to 3, wherein the glass transition temperature of said polymer is from -60 to +10°C.

5. The use according to any of claims 1 to 4, wherein said polymer is applied as an aqueous dispersion or as a melt.

6. The use according to any of claims 1 to 5, wherein said carrier comprises peelable labels or peelable protective sheets.

7. The use according to any of claims 1 to 6, wherein said polymers are applied to carriers subsequently crosslinked by high-energy radiation, especially UV light, and the resulting carriers coated with said polymer are bonded to substrates.

8. A method of applying carriers to substrates, which comprises applying a polymer according to any of claims 1 to 4 from the melt, as a solution or as an aqueous dispersion to said carriers, in the case of the solution or aqueous dispersion removing the solvent or the water, subsequently crosslinking said polymer by means of high-energy radiation, especially UV light, and bonding the resulting carriers, coated with the polymer, to substrates, said carriers being peelable.

## Revendications

1. Utilisation de polymères réticulables à la lumière U.V., polymérisés par voie radicalaire, en tant qu'adhésif pour coller des supports revêtus du polymère à des substrats, les supports dans des supports pelables, **caractérisée en ce que**, pour ce qui concerne 0,1 à 30 % en poids des monomères, à partir desquels le polymère est constitué, il s'agit de (méth)acrylate de méthyle et le polymère est en outre composé de 80 à 98,9 % en poids d'acrylate de n-butyle, d'acrylate d'éthyle ou d'acrylate de 2-éthylhexyle et de 0,05 à 10 % en poids de composés éthyléniquement insaturés comportant un groupe de photoamorceur.

2. Utilisation suivant la revendication 1, **caractérisée en ce que**, pour ce qui concerne le composé éthyléniquement insaturé comportant un groupe de photoamorceur, il s'agit d'un dérivé d'acétophénone ou de benzophénone.

3. Utilisation suivant l'une des revendications 1 ou 2, **caractérisée en ce que** le polymère présente une valeur K de 30 à 80, mesurée dans une solution à 1 % en poids du polymère dans du tétrahydrofuranne à 21°C.

4. Utilisation suivant l'une des revendications 1 à 3, **caractérisée en ce que** la température de transition vitreuse du polymère est de -60 à +10°C.

5. Utilisation suivant l'une des revendications 1 à 4, **caractérisée en ce que** le polymère est appliqué sous la forme d'une dispersion aqueuse ou d'une masse fondue.

6. Utilisation selon l'une des revendications 1 à 5, **caractérisée en ce que** le support comprend des étiquettes pelables et des feuilles protectrices pelables.

7. Utilisation suivant l'une des revendications 1 à 6, **caractérisée en ce que** les polymères sont appliqués sur des supports, ensuite réticulés par un rayonnement riche en énergie, en particulier une lumière U.V., et les supports obtenus, enduits du polymère, sont collés sur des substrats.

8. Procédé d'application de supports sur des substrats, **caractérisé en ce qu'**un polymère suivant l'une des revendications 1 à 4 est, à partir de la masse fondue, appliqué sur les supports sous la forme d'une solution ou d'une dispersion aqueuse, le solvant ou l'eau est éliminé dans le cas de la solution ou de la dispersion aqueuse, le polymère est ensuite réticulé par un rayonnement riche en énergie, en particulier une lumière U.V. et les supports obtenus sont collés sur des substrats, les supports étant pelables.
